# EUROPEAN PATENT APPLICATION

(11) **EP 4 365 992 A1**
(43) Date of publication of application: **08.05.2024**
(21) Application number: 22952146.3
(22) Date of filing: 11.11.2022
(51) Int. Cl.: H01M 4/58

(54) **ACTIVE MATERIAL, POSITIVE ELECTRODE MATERIAL, POSITIVE ELECTRODE, BATTERY, BATTERY APPARATUS, AND METHOD**

(30) Priority: 24.08.2022 CN 202211019884
(71) Applicant: Battero Tech Corporation Limited, Shanghai 201400 (CN)
(72) Inventor: HUANG, Haining, Fengxian, Shanghai 201400 (CN)
(74) Representative: Vitina, Maruta
(86) International application number: PCT/CN2022/131410
(87) International publication number: WO 2024/040756

(57) **Abstract**

A positive electrode active composite for lithium-ion batteries, consisting of 40%-60% by weight of a lithium iron phosphate material and 40%-60% by weight of a ternary material. A lithium-ion battery, whose positive electrode includes such active composite, is provided. An upper voltage range is controlled between 3.85-4.1 V, and a lower limit voltage is controlled between 2-2.8 V, which takes into account an operating voltage range of the lithium iron phosphate material and the ternary material, and allows the battery to realize the advantage of ultra-long service life of lithium iron phosphate and ternary material batteries, while achieving the advantage of overall battery safety.

## Description

### TECHNICAL FIELD

This application relates to lithium (Li)-ion batteries, and more particularly to an active composite, a positive electrode material, a positive electrode, a battery, a battery device and a method.

### BACKGROUND

The positive electrode material for the commercially-available batteries is predominated by lithium iron phosphate and ternary material. Generally, these two cathode material systems have different operating voltage ranges. Specifically, the lithium iron phosphate batteries have a voltage range of 2.5-3.65 V or 2.0-3.8 V and an operating voltage platform of about 3.2 V. The ternary batteries have an operating voltage range of 2.8-4.2 or 4.40 V and an operating voltage platform of about 3.7 V. Due to the different voltage ranges, the two material systems cannot be mixed together.

A positive electrode made of the lithium iron phosphate material has a theoretical gram capacity of 170 mAh/g and a gram capacity usually around 155 mAh/g after the initial delithiation, which means low energy density.

A positive electrode made of the ternary material has a high gram capacity and a high discharge platform voltage, such that a cell using the ternary system has a higher energy density than the lithium iron phosphate material, but has a poorer safety than the lithium iron phosphate material.

Therefore, it is necessary to develop a new active composite, a positive electrode material, a positive electrode, a battery, a battery device and a method to at least overcome some of the above problems existing in the prior art.

### SUMMARY

An object of the disclosure is to provide an active composite, a positive electrode material, a positive electrode, a battery, a battery device and a method, so as to balance the service life, safety and energy density of the lithium-ion batteries.

In order to achieve the above object, the following technical solutions are adopted herein.

In a first aspect, this application provides a positive electrode active composite for a lithium-ion battery, wherein the positive electrode active composite consists of 40%-60% by weight of a lithium iron phosphate material and 40%-60% by weight of a ternary material.

The positive electrode active composite composed of 40%-60% by weight of the lithium iron phosphate material and 40%-60% by weight of the ternary material is prepared by mixing the lithium iron phosphate material with the ternary material. For a lithium-ion battery whose positive electrode contains such active composite, an upper operating voltage is controlled within a range of 3.85-4.1 V, and a lower operating voltage is controlled within a range of 2-2.8 V, such that operating voltage ranges of the lithium iron phosphate material and the ternary material are taken into account. The lithium iron phosphate material has a controllable electrolyte oxidation problem within the operating voltage and has fewer side reactions at positive electrode interfaces, thereby allowing the battery to realize high safety and long service life of the lithium iron phosphate material. In addition, between the upper operating voltage and the lower operating voltage, the volume change of crystal lattices of the ternary material is relatively low, such that the structural attenuation of a positive electrode cathode material itself can be effectively reduced. Meanwhile, the partial introduction of the ternary material can ultimately realize high energy density of the battery.

In some embodiments, the ternary material is lithium nickel manganese cobalt oxide or lithium nickel cobalt aluminum oxide.

In a second aspect, this application provides a positive electrode material for a lithium-ion battery, comprising a binder, a conductive agent and the positive electrode active composite.

In a third aspect, this application provides a positive electrode of a lithium-ion battery, comprising a current collector and the positive electrode material; wherein the positive electrode material is coated on or filled in the current collector.

In a fourth aspect, this application provides a lithium-ion battery, comprising a cell and an electrolyte; wherein the cell comprises the positive electrode, a negative electrode and a separator; and the separator is located between the positive electrode and the negative electrode.

In some embodiments, the electrolyte comprises an electrolyte additive, and the electrolyte additive is selected from the group consisting of a boron-containing additive, a sulfur-containing additive and a carbonate additive. The electrolyte additive can stabilize an interface between the electrode and the electrolyte, or form a passivation film on a surface of the positive electrode, so as to reduce the degradation of electrode surfaces and the oxidative decomposition of the electrolyte, thereby reducing the risk of battery bulging caused by gas generated inside and improving the battery safety.

In a fifth aspect, this application provides a lithium-ion battery device, comprising a voltage control module and the lithium-ion battery; wherein the voltage control module comprises a storage unit, a monitoring unit and a control unit; the storage unit is configured to store a preset voltage value, wherein the preset voltage value comprises an upper limit voltage value V1, and the upper limit voltage value V1 is greater than or equal to 3.85 V and less than or equal to 4.1 V; the monitoring unit is configured to monitor an operating voltage of the lithium-ion battery and generate an operating voltage value V0; and the control unit, the storage unit and the monitoring unit are electrically connected with each other, and the voltage control module is configured to control the lithium-ion battery to stop charging when the operating voltage value V0 is greater than or equal to the upper limit voltage value V1.

In some embodiments, the preset voltage value further comprises a lower limit voltage value V2, and the lower limit voltage value V2 is greater than or equal to 2 V and less than or equal to 2.8 V; and the voltage control module is configured to control the lithium-ion battery to stop discharging when the operating voltage value V0 is less than or equal to the lower limit voltage value V2.

The lithium-ion battery device has the following beneficial effects. The control unit is used to determine whether the operating voltage of the lithium-ion battery obtained by the monitoring unit is within a range from the lower limit voltage value to the upper limit voltage value prestored in the storage unit. If the operating voltage is not within the range, the lithium-ion battery is controlled to terminate charging or discharging, such that the lithium-ion battery, whose positive electrode is formed by mixing the lithium iron phosphate material and the ternary material, is operated within a suitable voltage range for both materials, thus simultaneously taking advantages of the high safety and long service life of the lithium iron phosphate material and the high energy density of the ternary material.

In a sixth aspect, this application provides a method for operating the lithium-ion battery, comprising: controlling an operating voltage value V0 of the lithium-ion battery to be less than or equal to an upper limit voltage value V1; wherein the upper limit voltage value V1 is greater than or equal to 3.85 V and less than or equal to 4.1 V.

In some embodiments, the method further comprises controlling the operating voltage value V0 of the lithium-ion battery to be greater than or equal to a lower limit voltage value V2; wherein the lower limit voltage value V2 is greater than or equal to 2 V and less than or equal to 2.8 V.

The lithium-ion battery operating method provided herein has the following beneficial effects. Whether the operating voltage of the lithium-ion battery is within a preset range from the lower limit voltage value to the upper limit voltage value is determined. If the operating voltage is not within the range, the lithium-ion battery is controlled to terminate charging or discharging, such that the lithium-ion battery, whose positive electrode is formed by mixing the lithium iron phosphate material and the ternary material, is operated within a suitable voltage range for both materials, thus simultaneously taking advantages of the high safety and long service life of the lithium iron phosphate material and the high energy density of the ternary material.

In a seventh aspect, this application provides an active lithium replenishment method for the above lithium-ion battery, comprising: charging the lithium-ion battery to an activation voltage V3; wherein the activation voltage V3 is greater than or equal to 4.2 V and less than or equal to 4.4 V.

The beneficial effects of the active lithium replenishment method are described as follows. After the lithium-ion battery is charged to reach the activation voltage V3, which is greater than or equal to 4.2 V and less than or equal to 4.4 V. For the loss of the active lithium during charge/discharge cycles in subsequent use of a secondary battery, the battery can be charged to reach a voltage within a range of 4.2-4.4 V, thereby effectively realizing the effect of replenishing the lithium and improving the battery capacity and cycle life.

### BRIEF DESCRIPTION OF THE DRAWINGS

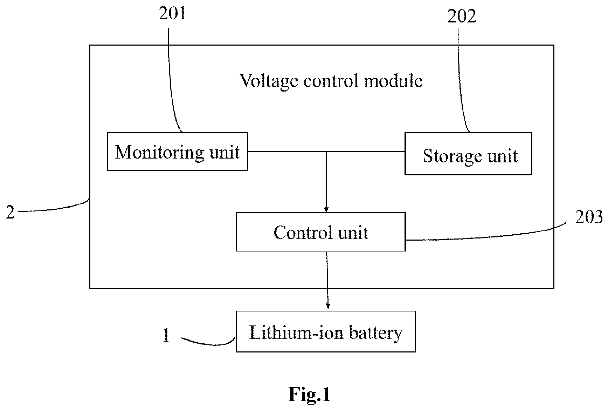

Fig. 1 illustrates a structural block diagram of a lithium-ion battery device in accordance with an embodiment of the present disclosure.

### DETAILED DESCRIPTION OF EMBODIMENTS

In order to make the purpose, technical solutions and advantages of the embodiments of the present disclosure clearer, the technical solutions in the embodiments of the present disclosure will be clearly and completely described below. Obviously, provided herein are merely some of the embodiments of the disclosure, instead of all of the embodiments. Based on the embodiments of the disclosure, all other embodiments obtained by those of ordinary skill in the art without making creative efforts shall fall within the scope of the disclosure defined by the appended claims. Unless otherwise defined, technical or scientific terms used herein shall have the same meaning as commonly understood by those of ordinary skill in the art to which this application belongs. As used herein, terms "comprise" and similar words are intended to mean that the element or object appearing before the term include the elements or objects listed thereafter and their equivalents, without excluding other elements or objects.

In the prior art, batteries containing lithium iron phosphate materials and batteries containing ternary materials have different operating voltage ranges. If a lithium iron phosphate material battery is operated above a suitable operating voltage range, there will be safety and reliability issues such as storage and gas production. Moreover, a ternary material battery cannot realize material capacity in a lower working voltage range.

In order to solve the problems existing in the prior art, an embodiment of the present disclosure provides a positive electrode active composite for a lithium-ion battery, which consists of 40%-60% by weight of a lithium iron phosphate material and 40%-60% by weight of a ternary material. In other words, if mass percentages of the lithium iron phosphate material and the ternary material in the positive electrode active composite are X and Y, respectively, 40% ≤ X ≤ 60% and 40% ≤ Y ≤ 60%. The materials can be physically mixed during the slurry preparation, which are mixed by adding the materials simultaneously to a slurry of NMP solvent.

In some embodiments, the positive electrode active composite can be composed of 40% by weight of the lithium iron phosphate material and 60% by weight of the ternary material; 45% by weight of the lithium iron phosphate material and 55% by weight of the ternary material; 50% by weight of the lithium iron phosphate material and 50% by weight of the ternary material; 55% by weight of the lithium iron phosphate material and 45% by weight of the ternary material; or 60% by weight of the lithium iron phosphate material and 40% by weight of the ternary material. In other words, if mass percentages of the lithium iron phosphate material and the ternary material in the positive electrode active composite are X and Y, respectively, X+Y=100%, where 40% ≤ X ≤ 60% and 40% ≤ Y ≤ 60%.

In a specific embodiment of the present disclosure, the lithium iron phosphate material LFP is LiFePO₄, which has a full battery gram capacity of 144 mAh/g within a voltage range of 2.5-4.1 V, a particle size D50 of 1.1 µm and a carbon coating content of 1.2%. The ternary material specifically used herein is a Ni83 material with a quasi-single crystal morphology and a chemical formula of LiNi_{0.83}Co_{0.07}Mn_{0.10}O₂, which has a full battery gram capacity of 185 mAh/g within a voltage range of 2.5-4.1 V, a full battery gram capacity of 197 mAh/g within a voltage range of 2.5-4.20 V when activated and a particle size D50 of 4.9 µm.

In some embodiments, the positive electrode active composite is used for manufacturing positive electrode materials for lithium-ion batteries.

In some embodiments, the lithium iron phosphate material LFP and the ternary material Ni83 are mixed together to obtain a positive electrode active composite for a lithium-ion battery, which consists of 40%-60% by weight of a lithium iron phosphate material and 40%-60% by weight of a ternary material. An operating upper limit voltage of a battery made of the positive electrode active composite is controlled within a range of 3.85-4.1 V, and an operating lower limit voltage of the battery made of the positive electrode active composite is controlled within a range of 2-2.8 V, which can take operating voltage ranges of the lithium iron phosphate material and the ternary material into account, thus simultaneously taking advantages of the high safety and long service life of the lithium iron phosphate material and the high energy density of the ternary material.

Specifically, the dissolution of iron ions in a positive electrode material of a lithium-ion battery may cause direct attenuation of battery capacity and increase in battery self-discharge, or even cause damage to a solid electrolyte interface film, thereby greatly reducing battery cycle performance. The lithium-ion battery containing the positive electrode active composite has an upper operating voltage controlled within a range of 3.85-4.1 V, relatively controllable iron dissolution and relatively few side reactions at a cathode interface. The ternary material can control the voltage within 4.1V, such that the H2/H3 phase transition and the volume shrinkage of the material after delithiation can be effectively reduced, thereby improving the overall stability and safety of the positive electrode.

In some embodiments, the ternary material includes lithium nickel manganese cobalt oxide or lithium nickel cobalt aluminum oxide.

In some embodiments of the disclosure, the ternary material is one of LiNi_{0.83}Co_{0.07}Mn_{0.10}O₂, LiNi_{0.75}Co_{0.1}Mn_{0.154}O₂ and LiNi_{0.65}Co_{0.1}Mn_{0.25}O₂.

An embodiment of the present application provides a positive electrode material for a lithium-ion battery, including a binder, a conductive agent and said positive electrode active composite.

In some embodiments, the lithium iron phosphate material LFP and the ternary material Ni83 are respectively made into a slurry through a series of processes such as mixing, dissolving, and dispersing. The positive electrode material is obtained by mixing the slurry made of the lithium iron phosphate material and the slurry made of the ternary material, where a mass ratio of the lithium iron phosphate material and the ternary material is (1-1.5): (1-1.5).

An embodiment of the present application provides a positive electrode of a lithium-ion battery, including a current collector and the positive electrode material. The positive electrode material is coated on or filled in the current collector.

An embodiment of the present application provides a lithium-ion battery, including a cell and an electrolyte. The cell includes the positive electrode, a negative electrode and a separator.

In some embodiments, the electrolyte includes an electrolyte additive. The lithium-ion battery made of the positive electrode active composite has an upper operating voltage controlled within a range of 3.85-4.1 V and a relatively controllable electrolyte oxidation issue. The electrolyte additive is added to form a passivation film or a polymer film on a surface of the positive electrode, so as to reduce the degradation of electrode surfaces and the oxidative decomposition of the electrolyte.

In some embodiments, the electrolyte includes a lithium salt, a solvent and an electrolyte additive. The lithium salt is lithium hexafluorophosphate or lithium bisfluorosulfonyl imide. The solvent contains any one or more of ethylene carbonate, diethyl carbonate, dimethyl carbonate, ethyl methyl carbonate, ethyl acrylate and propylene carbonate.

In some embodiments, the electrolyte additive contains any one or more of a boron-containing additive, a sulfur-containing additive and a carbonate additive.

In some embodiments, the electrolyte additive contains any one of propylene sulfite (PS), 1,3-propenyl-sultone (PST), vinylethylene carbonate (VEC) and adiponitrile (SN), and plays a role in suppressing the gas generation of the lithium-ion battery during storage.

Fig. 1 shows a structural block diagram of a lithium-ion battery device in accordance with an embodiment of the present disclosure.

As shown in Fig. 1, an embodiment of the disclosure provides a lithium-ion battery device, including the above lithium-ion battery 1 and a voltage control module 2.

The voltage control module 2 includes a monitoring unit 201, a storage unit 202 and a control unit 203.

The storage unit 202 configured to store a preset voltage value. The preset voltage value includes an upper limit voltage value V1 and a lower limit voltage value V2. Specifically, for the lithium-ion battery 1, the upper limit voltage value V1 is greater than or equal to 3.85 V and less than or equal to 4.1 V, and the lower limit voltage value V2 is greater than or equal to 2 V and less than or equal to 2.8 V.

The monitoring unit 201 is configured to monitor an operating voltage of the lithium-ion battery 1 and generate an operating voltage value V0.

The control unit 203, the storage unit 202 and the monitoring unit 201 are electrically connected with each other. The voltage control module 2 is configured to control the lithium-ion battery 1 to stop charging or discharging when the operating voltage value V0 is greater than or equal to the upper limit voltage value V1 or when V0 is less than or equal to V2.

In some embodiments, the monitoring unit 201 includes a battery voltage monitoring circuit directly connected to the lithium-ion battery 1, which is configured to obtain the voltage of the lithium-ion battery.

In some embodiments, the control unit 203 includes a comparator and a switch provided in an output circuit of the lithium-ion battery 1. The comparator is configured to receive the operating voltage value V0 from the monitoring unit 201 and compare V0 with the preset upper limit voltage value V1 and the lower limit voltage value V2 stored in the storage unit 202. If the operating voltage value V0 is not within a range from the lower limit voltage value V2 to the upper limit voltage value V1, the switch is disconnected by the comparator to stop the charging or discharging of the lithium-ion battery 1.

In some embodiments, the upper limit voltage value V1 can be 3.85 V, 3.95 V, 4.05V or 4.1 V.

In some embodiments, the lower limit voltage value V2 can be 2 V, 2.2 V, 2.4 V, 2.6 V or 2.8 V.

An embodiment of the present application provides a method for operating the lithium-ion battery. An operating voltage value V0 of the lithium-ion battery is controlled to be less than or equal to an upper limit voltage value V1 and greater than or equal to a lower limit voltage value V2. The upper limit voltage value V1 is greater than or equal to 3.85 V and less than or equal to 4.1 V, and the lower limit voltage value V2 is greater than or equal to 2 V and less than or equal to 2.8 V.

It should be noted that the steps of the method for operating the above lithium-ion battery correspond to a structure and principle of the above lithium-ion battery device, thus no further description will be provided herein.

An embodiment of the present application provides an active lithium replenishment method for the lithium-ion battery. The lithium-ion battery is charged to an activation voltage V3. The activation voltage V3 is greater than or equal to 4.2 V and less than or equal to 4.4 V, so as to ameliorate the loss of active lithium occurring during a charging/discharging cycle of the lithium-ion battery in subsequent use process, and effectively replenish the lithium-ion battery with lithium according to an actual state of the battery and a loss amount of the active lithium.

In some embodiments, after a cell capacity is subjected to a certain attenuation with an attenuation capacity of Cₗₒₛₛ, the lithium-ion battery is charged to reach the activation voltage V3. The activation voltage V3 is greater than or equal to 4.2 V and less than or equal to 4.4 V, and an increased charging capacity from V1 to V3 is not greater than the attenuation capacity Cₗₒₛₛ.

Therefore, in some other embodiments, a lithium-ion battery is provided. The lithium-ion battery includes a cell. The cell includes a positive electrode and a negative electrode. The positive electrode includes a positive electrode material. The positive electrode material includes a positive electrode active composite for a lithium-ion battery. The positive electrode active composite includes a lithium iron phosphate material and a ternary material physically mixed. The positive electrode active composite is set to have mass percentages of the lithium iron phosphate material and the ternary material of X and Y, respectively, X+Y=100%, where 40% ≤ X ≤ 60% and 40% ≤ Y ≤ 60%. An operating voltage value V0 of the lithium-ion battery is controlled to be less than or equal to an upper limit voltage value V1, and the upper limit voltage value V1 is greater than or equal to 3.85 V and less than or equal to 4.1 V. The operating voltage value V0 of the lithium-ion battery is also controlled to be greater than or equal to a lower limit voltage value V2, and the lower limit voltage value V2 is greater than or equal to 2 V and less than or equal to 2.8 V. Furthermore, the lithium-ion battery is charged to reach an activation voltage V3, where the activation voltage V3 is greater than or equal to 4.2 V and less than or equal to 4.4 V. Therefore, the positive electrode active composite is obtained by physically mixing the lithium iron phosphate material with the ternary material, an operating upper limit voltage of the lithium-ion battery made of the active composite is controlled to be 3.85-4.1 V, and an operating lower limit voltage of the lithium-ion battery made of the active composite is controlled to be 2-2.8 V, such that an operating voltage range of the lithium iron phosphate material and an operating voltage range of the ternary material can be balanced. The lithium iron phosphate material has a controllable electrolyte oxidation problem within this operating voltage range and has fewer side reactions at a positive electrode interface, which facilitates the battery to realize advantages of high safety and long service life of lithium iron phosphate material batteries. In addition, between the upper operating voltage and the lower operating voltage, a degree of change in the lattice volume of the ternary material is low, such that the structural attenuation of a positive electrode cathode material itself can be effectively reduced. Meanwhile, the partial introduction of the ternary material can ultimately facilitate the realization of high energy density of the ternary material. Furthermore, for the loss of the active lithium during charge/discharge cycles in subsequent use of a secondary battery, the battery can be charged to reach within a range of 4.2-4.4 V, under which the battery can be replenished with lithium under the activation voltage, thereby improving the battery capacity and battery cycle life.

The positive electrode active composites for lithium-ion batteries provided in Embodiments 1-5 each consist of different mass percentages of the lithium iron phosphate material and the ternary material, referring to Table 1 for the specific compositive and voltage parameter. Comparative Examples 1-2 provide a lithium iron phosphate material battery and a ternary material battery, respectively, referring to Table 1. In other words, if mass percentages of the lithium iron phosphate material and the ternary material in the positive electrode active composite are X and Y, respectively, X+Y=100%, where 40% ≤ X ≤ 60% and 40% ≤ Y ≤ 60%.

**Table 1**

| Number | Proportion of lithium iron phosphate material | | Proportion of ternary material | Operating voltage range | Activation voltage value |
|---|---|---|---|---|---|
| Embodiment 1 | 60% | | 40% | 2.0-4.1 V | 4.25 V |
| Embodiment 2 | 50% | | 50% | 2.0-4.1 V | 4.25 V |
| Embodiment 3 | 50% | | 50% | 2.0-4.0 V | 4.25 V |
| Embodiment 4 | 50% | | 50% | 2.0-4.1 V | 4.25 V |
| Embodiment 5 | 40% | | 60% | 2.0-4.1 V | 4.25 V |
| Comparative Example 1 | 100% | | 0% | 2.0-3.85 V | / |
| Comparative Example 2 | 0% | | 100% | 2.0-4.25 V | / |

The lithium-ion batteries of Embodiments 1-5 and the batteries in Comparative Examples 1-2 were tested for service life respectively. Referring to Table 2, the lithium-ion batteries consisting of 40%-60% by weight of the lithium iron phosphate material and 40%-60% by weight of the ternary material had a better cyclic capacity retention rate than the ternary material battery and a better low-temperature energy retention rate than the lithium iron phosphate material battery. In other words, if mass percentages of the lithium iron phosphate material and the ternary material in the positive electrode active composite are X and Y, respectively, X+Y=100%, where 40% ≤ X ≤ 60% and 40% ≤ Y ≤ 60%.

**Table 2**

| Number | Proporti on of lithium iron phospha te material | Proporti on of lithium iron phosphat e material | Operating voltage range | Activation voltage value | Cyclic capacity retention rate 1C/1C for 500 times at 45°C | Storage capacity retention rate 100%SOC at 45°C for 30 days | Low-temperature energy retention rate at -20°C and 0.33C |
|---|---|---|---|---|---|---|---|
| Embodime nt 1 | 60% | 40% | 2.0-4.1V | 4.25V | 94.5% | 96.2% | 60.2% |
| Embodime nt 2 | 50% | 50% | 2.0-4.1V | 4.25V | 94.8% | 96.0% | 63.2% |
| Embodime nt 3 | 50% | 50% | 2.0-4.0 V | 4.25V | 95.6% | 97.2% | 63.1% |
| Embodime nt 4 | 50% | 50% | 2.0-4.1V | 4.25V | 94.1% | 95.2% | 63.3% |
| Embodime nt 5 | 40% | 60% | 2.0-4.1V | 4.25V | 94.2% | 95.8% | 64.2% |
| Comparati ve Example 1 | 100% | 0% | 2.0-3.85V | / | 96.2% | 97.3% | 57.2% |
| Comparati ve Example 2 | 0% | 100% | 2.0-4.25 V | / | 90.1% | 95.4% | 65.2% |

The lithium-ion batteries of Embodiments 1, 2 and 5 and the batteries of Comparative Examples 1-2 were respectively subjected to compacted density tests. Referring to Table 3, the lithium-ion batteries consisting of 40%-60% by weight of the lithium iron phosphate material and 40%-60% by weight of the ternary material had a higher compacted density than the lithium iron phosphate material battery and an overall improved energy density compared to the lithium iron phosphate material battery. In other words, if mass percentages of the lithium iron phosphate material and the ternary material in the positive electrode active composite are X and Y, respectively, X+Y=100%, where 40% ≤ X ≤ 60% and 40% ≤ Y ≤ 60%.

**Table 3**

| Number | Proportion of lithium iron phosphate material | Proportion of ternary material | Operating voltage range | Activation voltage value | Ultimate compacted density of positive electrode sheet g/cm³ | Cell volume energy density Wh/L |
|---|---|---|---|---|---|---|
| Embodiment 1 | 60% | 40% | 2.0-4.1 V | 4.25 V | 2.9 | 440 |
| Embodiment 2 | 50% | 50% | 2.0-4.1 V | 4.25 V | 3.0 | 470 |
| Embodiment 5 | 40% | 60% | 2.0-4.1 V | 4.25 V | 3.1 | 500 |
| Comparative Example 1 | 100% | 0% | 2.0-3.85 V | / | 2.5 | 400 |
| Comparative Example 2 | 0% | 100% | 2.0-4.25 V | / | 3.5 | 560 |

Comparative Examples 3-5 provide batteries with different mass percentages of the lithium iron phosphate material and the ternary material under different operating voltages. The lithium-ion batteries of Embodiments 1, 2 and 5 and the batteries of Comparative Examples 1-5 were respectively subjected to nail penetration and abuse tests. Referring to Table 4, the lithium-ion batteries consisting of 40%-60% by weight of the lithium iron phosphate material and 40%-60% by weight of the ternary material had a batter nail penetration rate than the ternary material battery. In other words, if mass percentages of the lithium iron phosphate material and the ternary material in the positive electrode active composite are X and Y, respectively, X+Y=100%, where 40% ≤ X ≤ 60% and 40% ≤ Y ≤ 60%.

**Table 4**

| Number | Proportion of lithium iron phosphate material | Proportion of ternary material | Operating voltage range | Nail penetration rate |
|---|---|---|---|---|
| Embodiment 1 | 60% | 40% | 2.0-4.1V | 5/5 100% |
| Embodiment 2 | 50% | 50% | 2.0-4.1V | 5/5 100% |
| Embodiment 5 | 40% | 60% | 2.0-4.1V | 5/5 100% |
| Comparative Example 1 | 100% | 0% | 2.0-3.85 V | 5/5 100% |
| Comparative Example 2 | 0% | 100% | 2.0-4.25 V | 0/5 0% |
| Comparative Example 3 | 30% | 70% | 2.0-4.20 V | 3/5 60% |
| Comparative Example 4 | 20% | 80% | 2.0-4.05 V | 2/5 40% |
| Comparative Example 5 | 10% | 90% | 2.0-4.05 V | 0/5 0% |

Although the embodiments of the present disclosure have been described in detail above, it is obvious to those skilled in the art that various modifications and changes can still be made to these embodiments. It should be understood that such modifications and changes made without departing from the spirit of the disclosure shall fall within the scope defined by the appended claims.

## Claims

1. A positive electrode active composite for a lithium-ion battery, **characterized in that** the positive electrode active composite consists of 40%-60% by weight of a lithium iron phosphate material and 40%-60% by weight of a ternary material.

2. The positive electrode active composite according to claim 1, **characterized in that** the ternary material is lithium nickel manganese cobalt oxide or lithium nickel cobalt aluminum oxide.

3. A positive electrode material for a lithium-ion battery, comprising:
a binder;
a conductive agent; and
the positive electrode active composite according to any one of claims 1-2.

4. A positive electrode of a lithium-ion battery, comprising:
a current collector; and
the positive electrode material according to claim 3;
wherein the positive electrode material is coated on or filled in the current collector.

5. A lithium-ion battery, comprising:
a cell; and
an electrolyte;
wherein the cell comprises the positive electrode according to claim 4, a negative electrode and a separator; and
the separator is located between the positive electrode and the negative electrode.

6. The lithium-ion battery according to claim 5, **characterized in that** the electrolyte comprises an electrolyte additive, and the electrolyte additive is selected from the group consisting of a boron-containing additive, a sulfur-containing additive and a carbonate additive.

7. A lithium-ion battery device, comprising:
a voltage control module; and
the lithium-ion battery according to any one of claims 5-6;
wherein the voltage control module comprises a storage unit, a monitoring unit and a control unit;
the storage unit is configured to store a preset voltage value, wherein the preset voltage value comprises an upper limit voltage value V1, and the upper limit voltage value V1 is greater than or equal to 3.85 V and less than or equal to 4.1 V;
the monitoring unit is configured to monitor an operating voltage of the lithium-ion battery and generate an operating voltage value V0; and
the control unit, the storage unit and the monitoring unit are electrically connected with each other, and the voltage control module is configured to control the lithium-ion battery to stop charging when the operating voltage value V0 is greater than or equal to the upper limit voltage value V1.

8. The lithium-ion battery device according to claim 7, **characterized in that** the preset voltage value further comprises a lower limit voltage value V2, and the lower limit voltage value V2 is greater than or equal to 2 V and less than or equal to 2.8 V; and the voltage control module is configured to control the lithium-ion battery to stop discharging when the operating voltage value V0 is less than or equal to the lower limit voltage value V2.

9. A method for operating the lithium-ion battery according to any one of claims 5-6, comprising:
controlling an operating voltage value V0 of the lithium-ion battery to be less than or equal to an upper limit voltage value V1;
wherein the upper limit voltage value V1 is greater than or equal to 3.85 V and less than or equal to 4.1 V.

10. The method according to claim 9, further comprising:
controlling the operating voltage value V0 of the lithium-ion battery to be greater than or equal to a lower limit voltage value V2;
wherein the lower limit voltage value V2 is greater than or equal to 2 V and less than or equal to 2.8 V.

11. An active lithium replenishment method for the lithium-ion battery according to any one of claims 5-6, comprising:
charging the lithium-ion battery to an activation voltage V3;
wherein the activation voltage V3 is greater than or equal to 4.2 V and less than or equal to 4.4 V.
